# EUROPEAN PATENT APPLICATION

(11) **EP 2 139 023 A2**
(43) Date of publication of application: **30.12.2009**
(21) Application number: 09161105.3
(22) Date of filing: 26.05.2009
(51) Int. Cl.: H01J 61/067, H01J 61/30, H01J 63/02

(54) **Light emission device and display device using the light emission device as light source**

(30) Priority: 24.06.2008 KR 20080059599
(71) Applicant: Samsung SDI Co., Ltd., Suwon-si Gyeonggi-do (KR)
(72) Inventor: Lee, So-Ra Legal & Team, Samsung SDI Co., LTD.,, Gyeonggi-do (KR); Kim, Jae-Myung Legal & IP Team, Samsung SDI Co.,, Gyeonggi-do (KR); Joo, Kyu-Nam Legal & IP Team, Samsung, SDI Co., LTD.,, Gyeonggi-do (KR); Kim, Yoon-Jin Legal & IP Team, Samsung SDI Co., LTD.,, Gyeonggi-do (KR); Jeong, Jae-Sun Legal & IP Team, Samsung SDI Co., LTD.,, Gyeonggi-do (KR)
(74) Representative: Gulde Hengelhaupt Ziebig & Schneider

(57) **Abstract**

A light emission device (100) includes first and second substrates (12,14) facing each other. An electron emission unit (18) is located on a surface of the first substrate and that has an electron emission element (22). A light emission unit (20) is located on a surface of the second substrate. The electron emission element has first electrodes (24) located on a surface of the first substrate and spaced apart from each other. Second electrodes (26) are located between the first electrodes in parallel with each other. Electron emission regions (28) are located on side surfaces of the first electrodes facing the second electrodes. The first and second electrodes are oblique relative to one of planar orthogonal coordinate directions of the first substrate.

## Description

### BACKGROUND OF THE INVENTION

### 1. Field of the Invention

The present invention relates to a light emission device and a display device using the light emission device as a light source. More particularly, the present invention relates to electron emission elements that are provided in the light emission device to emit electrons toward a phosphor layer.

### 2. Description of the Related Art

Generally known light emission devices that can emit light to an external side typically have a front substrate on which an anode and a phosphor layer are formed and a rear substrate on which electron emission elements are formed. A sealing member is provided at the peripheries of the front and rear substrates to seal them together. The interior space defined between the front and rear substrates is exhausted to form a vacuum panel.

As an example, an electron emission element includes cathode electrodes spaced apart from each other at predetermined intervals, gate electrodes between the cathode electrodes in parallel with each other, and electron emission regions formed on side surfaces of the cathode electrodes facing the gate electrodes.

In the typical light emission device, when a predetermined driving voltage is applied to the cathode electrodes and the gate electrodes, the electron emission regions emit electrons and the phosphor layer is excited by the electrons, thereby emitting visible light. The light emission device independently controls the amount of electrons emitted from the respective electron emission elements to independently control the luminance of pixels corresponding to the respective electron emission elements. Such a light emission device may be used as a light source for a display device having a non-self-emissive display panel such as a liquid crystal display panel.

However, in prior art light emission devices, when the rear substrate is substantially formed in a rectangular shape and the cathode electrodes and the gate electrodes are formed with a stripe pattern extending in one of the length and width directions of the rear substrate, the electron beams generated by the electron emission regions may be diffused in a direction perpendicular to the direction in which the stripe pattern extends. Therefore, when the light emission device operates, a non-emission region exists in the phosphor layer.

That is, when it is assumed that the cathode and gate electrodes are formed in a stripe pattern extending in the length direction, the electron beams emitted from the electron emission regions toward the gate electrodes are diffused in the width direction. As a result, the non-emission region does not exist between two electron emission elements that are adjacent to each other in the width direction but exists between two emission elements that are adjacent to each other in the length direction.

Because of the non-emission region, prior art light emission devices have low luminance uniformity. Therefore, the prior art light emission device has diffusing plates in front of the vacuum panel, i.e., between the vacuum panel and the display panel, to enhance the luminance uniformity. In this case, the plurality of diffusing plates cause light loss and thus the amount of light reaching the display panel is reduced, thereby deteriorating efficiency (luminance/power consumption) of the light emission device.

### SUMMARY OF THE INVENTION

In accordance with the present invention a light emission device is provided having advantages of enhancing luminance uniformity and minimizing light loss caused by diffusing plates by preventing a non-emission region from existing in the phosphor layer during the operation of the light emission device, and a display device using the light emission device as a light source.

In an exemplary embodiment of the present invention, a light emission device includes first and second substrates facing each other. An electron emission unit is located on a surface of the first substrate and having an electron emission element. A light emission unit is located on a surface of the second substrate. The electron emission element includes first electrodes located on a surface of the first substrate and spaced apart from each other, second electrodes located between the first electrodes in parallel with each other, and electron emission regions located on side surfaces of the first electrodes facing the second electrodes. The first and second electrodes are oblique relative to one of planar orthogonal coordinate directions of the first substrate.

An oblique angle of the first and second electrodes relative to one of the planar orthogonal coordinate directions of the first substrate may be between 10 and 80°, preferably it is between 30 and 60°. More preferably it is 45°.

The light emission device may further include a first connecting member that is located on ends of the first electrodes to electrically interconnect the first electrodes and a second connecting member that is located on ends of the second electrodes to electrically interconnect the second electrodes.

The first connecting member may include a first portion in parallel with the first planar orthogonal coordinate direction and a second portion in parallel with the second planar orthogonal coordinate direction. The second connecting member may further include a third portion opposing the first portion with the first and second electrodes between the first and third portions, and a fourth portion opposing the second portion with the first and second electrodes between the second and fourth portions.

The light emission device may include electron emission elements, the first connecting members, and the second connecting members. The light emission device may further include first lines that are located between the first connecting members along one of the planar orthogonal coordinate directions to electrically interconnect the first connecting members, and second lines that are located between the second connecting members along the other of the planar orthogonal coordinate directions to electrically interconnect the second connecting members. The light emission device may further include dielectrics that are located between the first and second lines at respective intersecting regions of the first and second lines.

The electron emission element may further include second electron emission regions on side surfaces of the second electrodes facing the first electrodes. In this case, the first and second electrodes may respectively receive scan and data driving voltages during a first period, and may respectively receive the data driving voltages and scan driving voltages during a second period.

In another exemplary embodiment of the present invention, a display device of a display panel for displaying an image and the above-described light emission device for emitting light toward the display panel are provided.

The display panel may have first pixels, and the light emission device may have second pixels. The number of first pixels is greater than the number of second pixels, and the second pixels individually emit light in response to a gray scale of the corresponding first pixels. Therefore, the second pixels may individually emit light in response to a gray scale of the corresponding first pixels. The display panel may be a liquid crystal panel.

The light emission device according to the exemplary embodiment can reduce a non-emission region that may exist between electron emission elements that are adjacent to each other along one of the first planar orthogonal coordinate direction or second planar orthogonal coordinate direction, thereby enhancing luminance uniformity.

Therefore, the display device of the exemplary embodiment can display a high luminance image as no diffusing plate is installed between the light emission device and the display panel or the number of diffusing plates installed between the light emission device and the display panel is reduced, and thus the light loss caused by the diffusing plate can be minimized.

### BRIEF DESCRIPTION OF THE DRAWINGS

FIG. 1 is a partial cross-sectional view of a light emission device according to a first exemplary embodiment of the present invention, the cross-sectional view being taken along line I-I of FIG. 2.
FIG. 2 is a partial top plan view of an electron emission unit of the light emission device according to the first exemplary embodiment of the present invention.
FIG. 3 is an enlarged perspective view of an electron emission element of FIG. 2.
FIG. 4 is a schematic diagram illustrating electron emission elements and light emission regions of a phosphor layer corresponding to the respective electron emission elements of the light emission device according to the first exemplary embodiment of the present invention.
FIG. 5 is a partial cross-sectional view of a light emission device according to a second exemplary embodiment of the present invention.
FIG. 6 is a partial top plan view of an electron emission unit of the light emission device according to the second exemplary embodiment of the present invention.
FIGS. 7 and 8 are partial cross-sectional views of the light emission device according to the second exemplary embodiment of the present invention.
FIG. 9 is an exploded perspective view of a display device according to an exemplary embodiment of the present invention.
FIG. 10 is a partial cross-sectional view of a display panel depicted in FIG. 9.

### DETAILED DESCRIPTION OF THE EMBODIMENTS

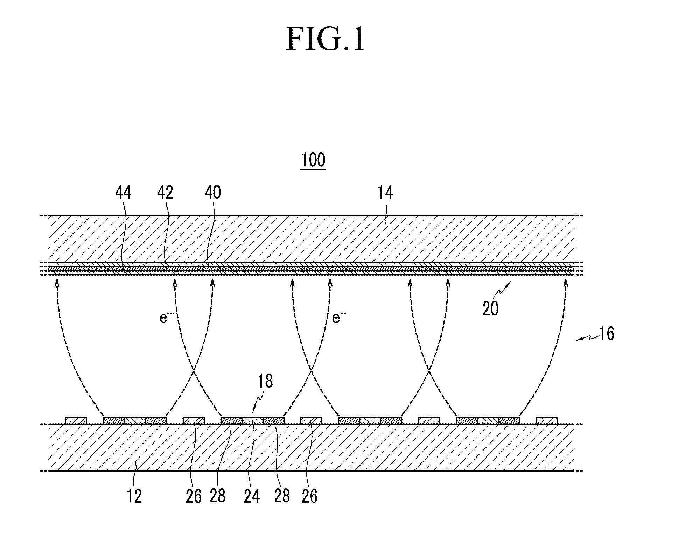

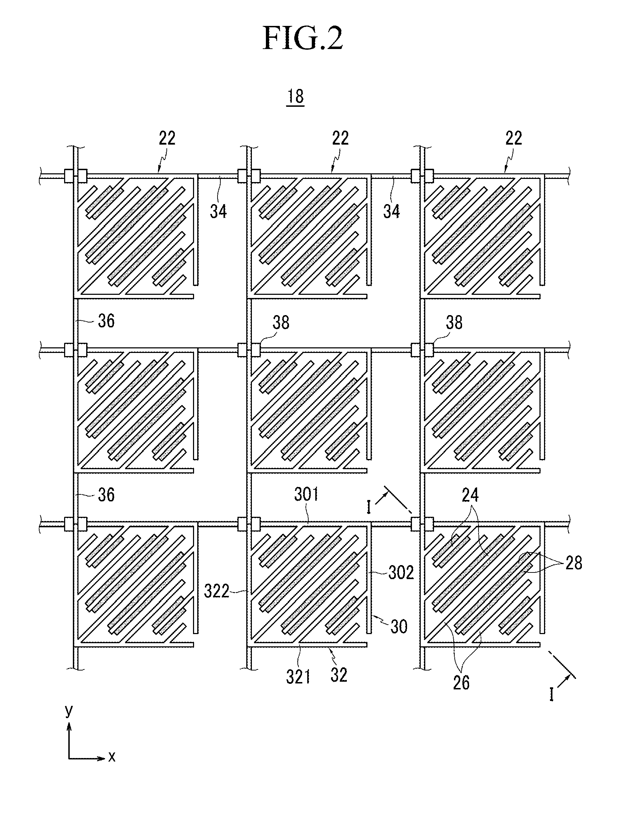

Referring to FIGS. 1 and 2, a light emission device 100 of the present exemplary embodiment includes first and second substrates 12, 14 facing each other with a predetermined interval therebetween. A sealing member (not shown) is provided at the peripheries of the first and second substrates 12, 14 to seal them together. Therefore, the first and second substrates 12, 14 define a sealed vessel. The interior of the sealed vessel is kept to a degree of vacuum of about 10⁻⁶ Torr, thereby forming a vacuum panel 16.

The first and second substrates 12, 14 may be divided into an active area that is surrounded by the sealing member and acts to emit visible light, and an inactive area that surrounds the active area. An electron emission unit 18 for emitting electrons is located on the active area of an inner surface of the first substrate 12, and a light emission unit 20 for emitting visible light is located on the active area of an inner surface of the second substrate 14. In the present exemplary embodiment, the second substrate 14 may be a front substrate of the light emission device 100.

The electron emission unit 18 may include electron emission elements 22 that independently control the amount of electrons emitted. The electron emission elements 22 are arranged in parallel with each other and spaced apart from each other in a first planar orthogonal coordinate direction (an x-direction in FIG. 2) and a second planar orthogonal coordinate direction (a y-direction in FIG. 2) intersecting the first planar orthogonal coordinate direction at a right angle. One electron emission element 22 corresponds to one pixel of the light emission device 100.

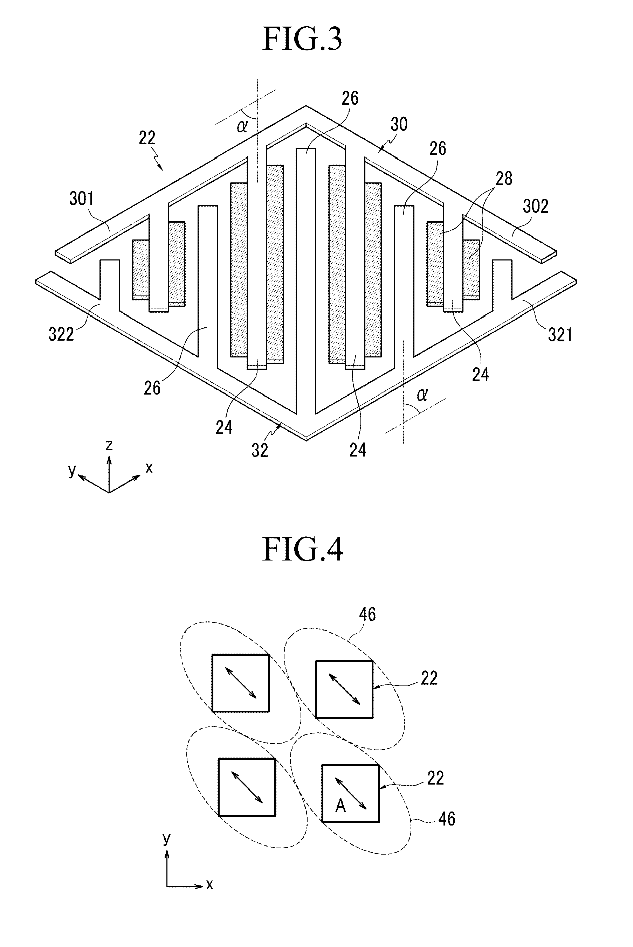

FIG. 3 is an enlarged perspective view of the electron emission element depicted in FIG. 2.

Referring to FIGS. 2 and 3, each of the electron emission elements 22 includes first electrodes 24 spaced apart from each other, second electrodes 26 in parallel with the first electrodes 24 between the first electrodes 24, and electron emission regions 28 formed on side surfaces of the first electrodes 24 facing the second electrodes 26. The electron emission regions 28 are formed along a length of each of the first electrodes 24 and spaced apart from the second electrodes 26 to prevent a short circuit between them.

The first electrodes 24 function as cathode electrodes for supplying a current to the electron emission regions 28, and the second electrodes 26 function as gate electrodes for controlling electron emission of the electron emission regions 28.

The electron emission regions 28 may be formed of a material such as a carbon-based material or a nanometer-scale material that can emit electrons when an electric field is applied around the electron emission regions under a vacuum atmosphere. For example, the electron emission regions 28 may be formed of a material selected from the group consisting of carbon nanotubes, graphite, graphite nanotubes, diamond-like carbon, fullerene, silicon nanowires, and combinations thereof.

Alternatively, the electron emission regions 28 may include carbide induction carbon. The carbide induction carbon may be produced through a process for allowing a carbide composition to react with a gas containing a halogen-group element and extracting elements except for carbon from the carbide composition.

In the present exemplary embodiment, the first and second electrodes 24, 26 are not parallel to one of the first planar orthogonal coordinate direction or the second planar orthogonal coordinate direction but are inclined (e.g., oblique) with respect to one of the first planar orthogonal coordinate direction or the second planar orthogonal coordinate direction.

That is, the first and second electrodes 24, 26 are at an oblique angle that is an acute angle α (see FIG. 3) that is greater than 0°but less than 90°relative to one of the first planar orthogonal coordinate direction or second planar orthogonal coordinate direction (e.g., X-direction or Y-direction in FIG. 3). For example, the oblique angle may be between 10 and 80°.

First ends of the first electrodes 24 are connected to a first connecting member 30 so that the first electrodes 24 are electrically interconnected. The first connecting member 30 includes a first portion 301 in parallel with the first planar orthogonal coordinate direction of the light emission device 100 and a second portion 302 in parallel with the second planar orthogonal coordinate direction of the light emission device 100. With reference to FIG. 2, the first connecting member 30 may be connected to right-upper ends of the first electrodes 24.

First ends of the second electrodes 26 are connected to a second connecting member 32 opposing the first connecting member 30 so that the second electrodes 26 can be electrically interconnected. The second connecting member 32 includes a third portion 321 in parallel with the first planar orthogonal coordinate direction of the light emission device 100 and a fourth portion 322 in parallel with the second planar orthogonal coordinate direction of the light emission device 100. With reference to FIG. 2, the second connecting member 32 may be connected to left-lower ends of the second electrodes 26.

Accordingly, the first and third portions 301, 321 are in the first planar orthogonal coordinate direction of the light emission device to oppose each other with the first and second electrodes 24, 26 therebetween. The second and fourth portions 302, 322 are in the second planar orthogonal coordinate direction of the light emission device 100 to oppose each other with the first and second electrodes 24, 26 therebetween.

First lines 34 are arranged between the first connecting members 30 in the first planar orthogonal coordinate direction of the light emission device 100 so as to electrically interconnect the first electrodes 24 of the electron emission elements 22 arranged in the first planar orthogonal coordinate direction. Second lines 36 are arranged between the second connecting members 32 in the second planar orthogonal coordinate direction of the light emission device 100 so as to interconnect the second electrodes 26 of the electron emission elements 22. Dielectrics 38 are formed between the first and second lines 34, 36 at intersection regions of the first and second lines 34, 36 to prevent a short circuit between the first and second lines 34, 36.

Referring again to FIG. 1, the light emission unit 20 includes an anode electrode 40 formed on the inner surface of the second substrate 14, a phosphor layer 42 located on a surface of the anode electrode 40, and a metal reflective layer 44 covering the phosphor layer 42.

The anode electrode 40 is formed of a transparent material such as indium tin oxide (ITO) so that the visible light emitted from the phosphor layer 42 can transmit therethrough. The anode electrode 40 is an acceleration electrode for attracting the electron beams. The anode electrode 40 maintains the phosphor layer 42 at a high potential state by receiving a positive direct current voltage (an anode voltage) of 5kV or more.

The phosphor layer 42 may be formed of mixed red, green, and blue phosphors to emit white light. The phosphor layer 42 may be located on the entire surface of the active area of the second substrate 14.

The metal reflective layer 44 may be an aluminum thin film having a thickness of several thousand A. The metal reflective layer 44 reflects the visible light radiated from the phosphor layer 42 toward the first substrate to the second substrate 14, thereby enhancing the luminance.

Alternatively, the light emission unit may not include the anode electrode. In this case, the anode voltage is applied to the metal reflective layer so that the metal reflective layer functions as the anode electrode.

The above-described light emission device 100 is designed to operate when a scan driving voltage is applied to one of the first and second lines 34, 36, a data driving voltage is applied to the other of the first and second lines 34, 36, and an anode voltage of 5kV or more is applied to an anode line electrically connected to the anode electrode 40.

As the light emission device 100 operates, an electric field is formed around the electron emission regions 28 at the electron emission elements (i.e., pixels) 22 where a voltage difference between the first and second electrodes 24, 26 is equal to or higher than a threshold value, thereby emitting electrons e-(see FIG. 1) from the electron emission regions 28. The emitted electrons are accelerated by the anode voltage to collide with specific portions of the phosphor layer 42, thereby exciting the specific portions of the phosphor layer 42.

Since the electrons are emitted from edges of the electron emission regions 28 toward the second electrodes 26 and subsequently directed toward the second substrate 14 by the anode voltage, a diffusion direction of the electron beams is the same as a width direction of the first and second electrodes 24, 26.

FIG. 4 is a schematic diagram illustrating the electron emission elements and the light emission regions of the phosphor layer corresponding to the respective electron emission elements of the light emission device. Referring to FIG. 4, in the present exemplary embodiment, a direction in which the electron beams are emitted is not identical to the first planar orthogonal coordinate direction or second planar orthogonal coordinate direction of the light emission device 100 but is oblique relative to the planar orthogonal coordinate directions of the light emission device 100.

In FIG. 4, an arrow A indicates the direction in which the electron beams are emitted.

Therefore, since light emission regions 46 of the phosphor layer 42 corresponding to the respective electron emission elements 22 are formed in an oval shape having a length in a diagonal direction between the planar orthogonal coordinate directions, no non-emission region exists between the electron emission elements 22 arranged in the planar orthogonal coordinate directions.

That is, the light emission device 100 in accordance with the present exemplary embodiment is designed to reduce a non-emission region that may exist between the pixels, thereby enhancing luminance uniformity. As a result, no diffusing plates need be installed in front of the vacuum panel 16 or the number of diffusing plates installed in front of the vacuum panel 16 may be reduced, thereby minimizing the light loss caused by the diffusing plates.

When the oblique angle α (see FIG. 3) of the first and second electrodes 24, 26 relative to one of the planar orthogonal coordinate directions (e.g., X - direction, or Y - direction) of the light emission device 100 is less than 10°or greater than 80°, a reduction effect of the non-emission region, which may be attained by changing the diffusion direction of the electron beams, cannot be sufficiently attained. Therefore, in an exemplary embodiment the oblique angle is set within the range of 10-80°.

The non-emission regions may partly exist between the electron emission elements 22 that are arranged in the diagonal direction. However, since these non-emission regions are formed in one direction but are dispersed, they have low visibility and thus do not significantly deteriorate the luminance uniformity.

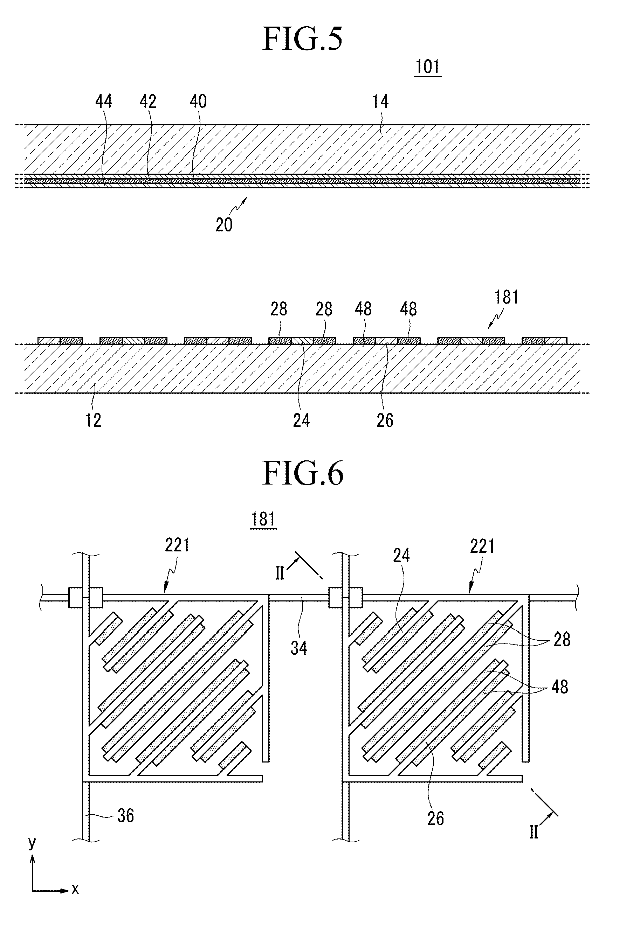

FIG. 5 is a partial cross-sectional view of a light emission device according to a second exemplary embodiment of the present invention, and FIG. 6 is a partial top plan view of an electron emission unit of the light emission device according to the second exemplary embodiment of the present invention. FIG. 5 is a cross-sectional view taken along line - of FIG. 6.

Referring to FIGS. 5 and 6, when electron emission regions located on side surfaces of the first electrodes 24 are referred to as first electron emission regions, a light emission device in accordance with a second exemplary embodiment further includes second electron emission regions 48 formed on side surfaces of second electrodes 26 facing the first electrodes 24 when compared with the light emission device of the first exemplary embodiment. For convenience, in the first and second exemplary embodiments, like reference numbers will be used to refer to like parts. In FIGS. 5 and 6, electron emission unit 181 electron emission element 221 are depicted.

The first and second electron emission regions 28, 48 are spaced apart from each other to prevent a short circuit therebetween. The second electron emission region 48 extends in a length direction of the second electrodes 26.

The light emission device 101 of the second exemplary embodiment may adopt a driving method in which scan and data driving voltages are alternately applied to the first and second electrodes 24, 26. According to this driving method, the electrodes that receive a lower one of the scan and data driving voltages become cathode electrodes and the electrodes that receive a higher one of the scan and data driving voltages become gate electrodes.

That is, the light emission device 101 operates such that, during a first period, the scan driving voltage is applied to the first electrodes 24 through first lines 34 and the data driving voltage is applied to the second electrodes 26 through second lines 36. In addition, during a second period, the scan driving voltage is applied to the second electrodes 26 through the second line 36 and the data driving voltage is applied to the first electrodes 24 through the first lines 34.

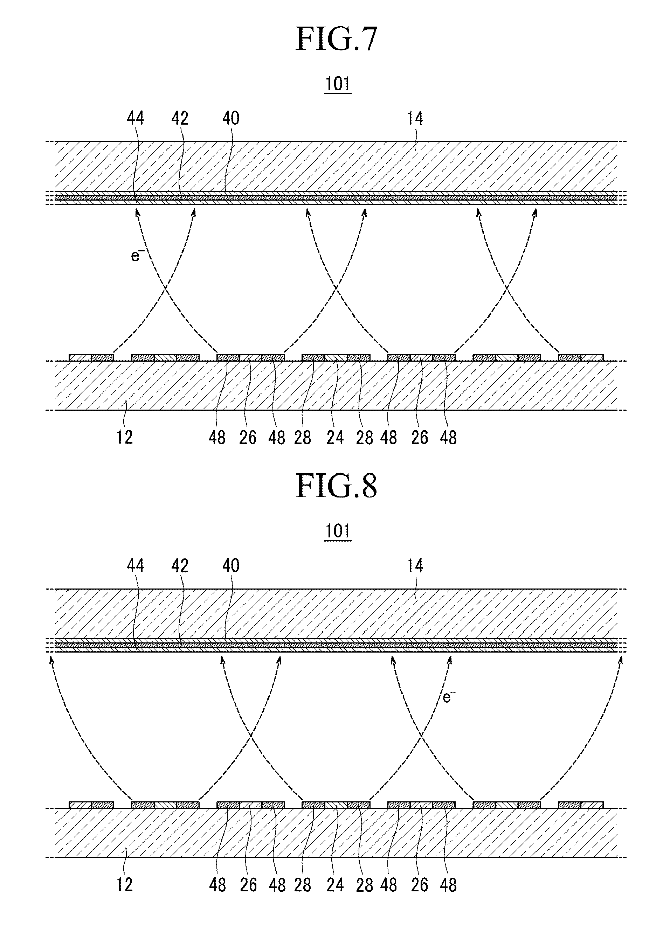

Here, when the scan driving voltage is higher than the data driving voltage, the second electrodes 26 become the cathode electrodes during the first period and thus the electrons e- (see FIG. 7) are emitted from the second electron emission regions 48 to excite the phosphor layer 42. In addition, during the second period, the first electrodes 24 become the cathode electrodes and thus the electrons e- (see FIG. 8) are emitted from the first electron emission regions 48 to excite the phosphor layer 42.

The light emission device 101 is operated in accordance with the repetition of the first and second periods so that the first and second electron emission regions 28, 48 alternately emit the electrons. According to the above-described driving method, since a load applied to each of the electron emission regions 28, 48 is reduced, the service life of the electron emission regions 28, 48 can increase and the luminance of the light emission device 101 can be enhanced. Furthermore, luminance uniformity is further enhanced because of the alternating emission of electrons towards phosphor layer 42.

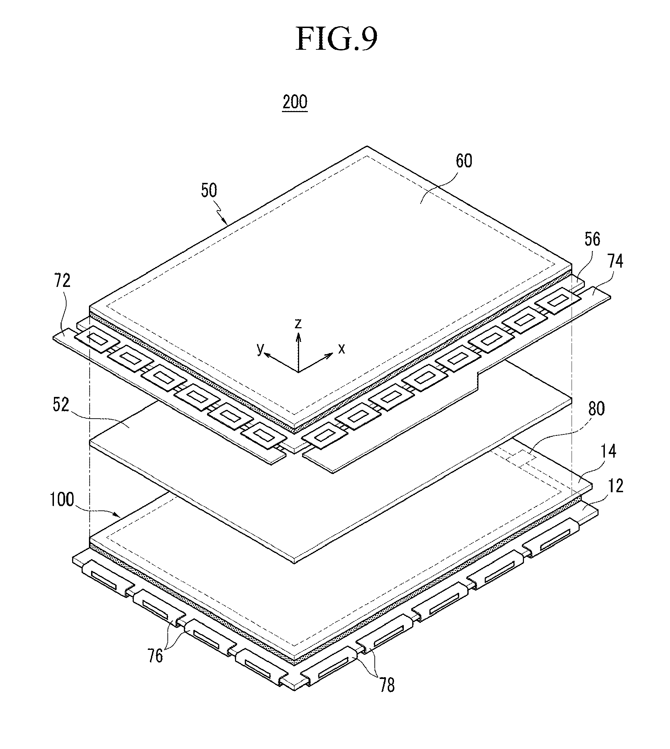

FIG. 9 is an exploded perspective view of a display device according to an exemplary embodiment of the present invention.

Referring to FIG. 9, a display device 200 of the present exemplary embodiment includes a light emission device 100 and a display panel 50 located in front of the light emission device 100. The display device 200 includes one of the light emission devices of the first and second exemplary embodiments. In FIG. 9, the light emission device 100 of the first exemplary embodiment is illustrated.

Since the light emission device 100 has the above-described electron emission unit and thus improves the luminance uniformity, no diffusing plate or a minimal number of diffusing plates can be provided between the light emission device and the display panel 50. FIG. 9 illustrates a case where one diffusing plate 52 is located between the light emission device 100 and the display panel 50. The diffusing plate 52 is spaced apart from the light emission device 100 by a predetermined distance.

The display panel 50 may be a liquid crystal panel or another non-self-emissive display panel. The following example will describe a case where the display panel 50 is a liquid crystal panel.

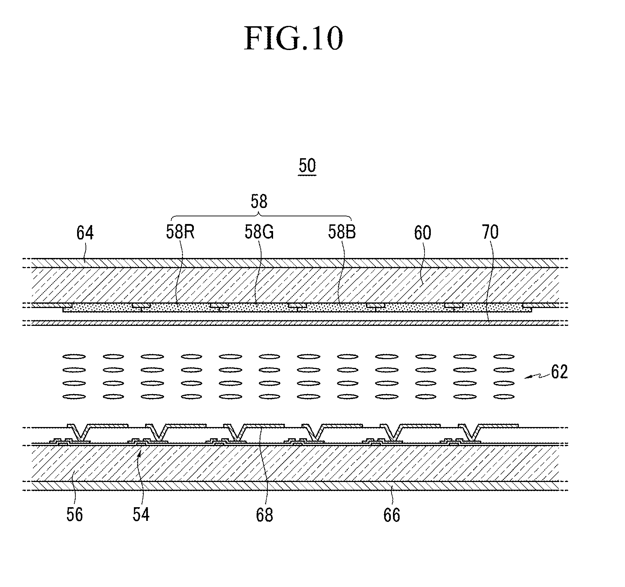

FIG. 10 is a partial cross-sectional view of the display panel 50 of FIG. 9. Referring to FIG. 10, the display panel 50 includes a lower panel 56 on which thin film transistors (TFTs) 54 are formed, an upper substrate 60 on which a color filter layer 58 is formed, and a liquid crystal layer 62 injected between the upper and lower substrates 60, 56. Polarizing plates 64, 66 are respectively attached on outer surfaces of the upper and lower substrates 60, 56 to polarize light passing through the display panel 50.

Transparent pixel electrodes 68 that are controlled by the TFTs 54 for respective sub-pixels are located on an inner surface of the lower substrate 56, and a transparent common electrode 70 is located on an inner surface of the upper substrate 60. The color filter layer 58 includes red, green, blue filter layers 58R, 58G, 58B that are located at each sub-pixel.

When the TFT 54 for a specific sub-pixel is turned on, an electric field is formed between the pixel electrode 68 and the common electrode 70, and an alignment angle of the liquid crystal molecules is varied by the electric field. The light transmittances of the pixels are individually varied in accordance with the varied alignment angle of the liquid crystal molecules. The display panel 50 can control the luminance and light luminance color of each pixel through the above-described process.

In FIG. 9, scan printed circuit board assembly (SPBA) 72 transfers scan driving signals to a gate electrode of the TFT, and data printed circuit board assembly (DPBA) 74 transfers data driving signals to a source electrode of the TFT.

Referring again to FIG. 9, the number of the pixels of the light emission device 100 is less than the number of the pixels of the display panel 50 so that one pixel of the light emission device 100 corresponds to two or more pixels of the display panel 50. Each of the pixels of the light emission device 100 can emit light in response to the highest gray scale among gray scales of the corresponding pixels of the display panel 50, and each represents a gray scale of 2 to 8 bits.

For convenience, the pixels of the display panel 50 are referred to as fist pixels and the pixels of the light emission device 100 are referred to as second pixels. The first pixels corresponding to one of the second pixels are referred to as a first pixel group.

Driving of the light emission device 100 is performed in the following manner. A signal controller (not shown) for controlling the display panel 50: 1) detects a highest gray scale among the gray scales of the first pixels of the first pixel group, 2) determines a gray scale required for light illumination of the second pixel according to the detected gray scale, 3) converts the determined gray scale into digital data, 4) generates a driving signal of the light emission device 100 using the digital data, and 5) applies the generated driving signal to the driving electrodes of the light emission device 100.

The driving signals of the light emission device 100 include scan driving signals and data driving signals. Either the first electrodes 24 or the second electrodes 26 receive the scan driving signals, and the other of the first electrodes 24 or the second electrodes 26 receive the data driving signals.

The SPBA and DPBA for driving the light emission device 100 may be located on a rear surface of the light emission device 100. For example, in FIG. 9, first connectors 76 connect the first lines to the SPBA and second connectors 78 connect the second lines to the DPBA. In addition, third connector 80 applies the anode voltage to the anode electrode.

The light emission device 101 of the second exemplary embodiment may adopt a driving method in which scan and data driving voltages are alternately applied to the first and second electrodes 24, 26. To achieve this driving method, the first electrodes 24 are connected to the SPBA and DPBA through the first connector 76, and the second electrodes 26 are also connected to the SPBA and DPBA through the second connector 78.

As described above, the second pixels of the light emission device 100 are synchronized with the corresponding first pixels groups when the first pixel groups display images to thereby perform light emission at predetermined gray scales. That is, the light emission device 100 is designed such that a high intensity of the light is emitted to a bright region of the image and a low intensity of the light is emitted to a dark region of the image. Hence, the display device of the present exemplary embodiment is able to attain enhanced dynamic contrast, ultimately realizing the display of the sharper images.

## Claims

1. A light emission device comprising:
a first substrate and a second substrate facing each other;
an electron emission unit comprising a plurality of electron emission elements arranged in a plurality of rows extending in a first planar orthogonal coordinate direction, each of the electron emission elements having:
first electrodes on a surface of the first substrate and spaced apart from each other, and
second electrodes alternatingly between and in parallel with the first electrodes; and
electron emission regions on side surfaces of the first electrodes facing the second electrodes; and
a light emission unit on a surface of the second substrate for emitting visible light,
wherein the first electrodes and the second electrodes are oblique relative to the first planar orthogonal coordinate direction and to a second planar orthogonal coordinate direction perpendicular to the first planar orthogonal coordinate direction of the first substrate.

2. The light emission device of claim 1, wherein an oblique angle of the first electrodes or the second electrodes relative to one of a first planar orthogonal coordinate direction or a second planar orthogonal coordinate direction of the first substrate is between 10 and 80°, between 30 and 60° or 45°.

3. The light emission device of one of the claims 1 or 2, further comprising:
a first connecting member on ends of the first electrodes for electrically interconnecting the first electrodes, and
a second connecting member on ends of the second electrodes for electrically interconnecting the second electrodes.

4. The light emission device of claim 3, wherein:
the first connecting member comprises:
a first portion in parallel with the first planar orthogonal coordinate direction, and
a second portion in parallel with the second planar orthogonal coordinate direction; and
the second connecting member comprises:
a third portion opposing the first portion with the first electrodes and the second electrodes between the first portion and the third portion, and
a fourth portion opposing the second portion with the first electrodes and the second electrodes between the third portion and the fourth portion.

5. The light emission device of one of the claims 3 or 4, wherein the light emission device further comprises:
first lines between the first connecting members along one of the first planar orthogonal coordinate direction and second planar coordinate direction for electrically interconnecting the first connecting members, and
second lines between the second connecting members along an other of the first planar orthogonal coordinate direction and the second planar orthogonal coordinate direction for electrically interconnecting the second connecting members.

6. The light emission device of claim 5, further comprising dielectrics between the first lines and the second lines at respective intersecting regions of the first lines and the second lines.

7. The light emission device of one of the preceding claims,
wherein the electron emission element further comprises second electron emission regions on side surfaces of the second electrodes facing the first electrodes.

8. The light emission device of claim 7, further including a first driver connected to the first electrodes and a second driver connected to the second electrodes, wherein the first and second drivers are adapted to alternately provide scan driving voltages to the first electrodes and data driving voltages to the second electrodes, respectively, during a first period and to provide data driving voltages to the first electrodes and scan driving voltages to the second electrodes during a second period.

9. A display device comprising:
a display panel for displaying an image, and
a light emission device according to one of the preceding claims for emitting light toward the display panel.

10. The display device of claim 9,
wherein the display panel has first pixels and the light emission device has second pixels,
wherein a number of the first pixels is greater than a number of the second pixels and the second pixels individually emit light in response to a gray scale of the corresponding first pixels.

11. The display device of one of the claims 9 or 10, wherein the display panel is a liquid crystal panel.
